# EUROPEAN PATENT APPLICATION

(11) **EP 2 810 921 A1**
(43) Date of publication of application: **10.12.2014**
(21) Application number: 14170340.5
(22) Date of filing: 28.05.2014
(51) Int. Cl.: C02F 1/42

(54) **Water filter and humidifier having the same**

(30) Priority: 05.06.2013 KR 20130064892
(71) Applicant: Samsung Electronics Co., Ltd, Gyeonggi-do 443-742 (KR)
(72) Inventor: Lee, Sang Hoon, Gyeonggi-do (KR); Kim, Jeong Myeong, Seoul (KR); Joo, Seung Ah, Gyeonggi-do (KR); Cho, Han Wook, Gyeonggi-do (KR)
(74) Representative: Walaski, Jan Filip

(57) **Abstract**

Disclosed herein is a water filter to improve hardness removal performance and a humidifier having the same. The water filter includes a case filled with an ion exchange resin, an introduction portion positioned on an outer lateral surface of the case, a discharge portion positioned on a bottom surface of the case, and an air discharge portion positioned at a center of the case. The air discharge portion is disposed lower than the introduction portion.

## Description

The present invention relates to a water filter to improve hardness removal performance and a humidifier having the same.

In general, underground water or tap water that is used for a humidifier contains ionized minerals such as magnesium and calcium. When such minerals are heated by a heater, they are extracted as scale and stuck to the interior of a pipe. As scale accumulates, the heater may overheat or the pipe may be blocked.

Therefore, to prevent the accumulation of scale, a water purification device filled with an ion exchange resin is installed in a water tank such that minerals in the water are filtered out through the water filter of the water purification device and the filtered water flows to an ultrasonic vibrator arranged at the bottom of the body of the device which vaporizes the water. Thereby, degradation of performance of a humidifier may be prevented.

Since the water filter is installed in the water tank, and the ultrasonic vibrator is arranged on the bottom of the body, a flow path allowing the water filtered through the water filter to flow to the vibrator needs to be formed. Accordingly, a rib of a predetermined height to form the flow path is provided.

However, the efficiency of utilization of the flow path and the ion exchange resin varies depending upon the structure of the rib. In the case that the rib is not high, water introduced into the water filter may fail to reach the upper end of the water filter due to resistance of the layer of the filling resin. This may result in degradation of hardness removal performance and non-uniform flow, lowering the efficiency of utilization of the ion exchange resin relative to the amount of the filling resin.

In the case that the rib is too high, not all the water filling the water container of the humidifier may be used, and accordingly there may be remaining water in the water container. Thereby, water usability may be degraded.

Therefore, it is an aspect of the present invention to provide a water filter to improve hardness removal performance and a humidifier having the same.

It is another aspect of the present invention to provide a water filter having an optimized shape to improve the efficiency of utilization of an ion exchange resin and a humidifier having the same.

It is a further aspect of the present invention to provide a water filter allowing free adjustment of the area of the introduction portion such that foreign matter contained in the inflow water may be controlled according to the condition of the inflow water so not to block the water filter, and a humidifier having the same.

Additional aspects of the invention will be set forth in part in the description which follows and, in part, will be obvious from the description, or may be learned by practice of the invention.

In accordance with one aspect of the present invention, a water filter including a case filled with an ion exchange resin, an introduction portion positioned on an outer lateral surface of the case, a discharge portion positioned on a bottom surface of the case, and an air discharge portion positioned at a center of the case, wherein the air discharge portion is disposed lower than the introduction portion.

The introduction portion may include at least one first introduction portion formed along an upper circumference of the lateral surface of the case, and at least one second introduction portion formed along a lower circumference of the lateral surface of the case.

The air discharge portion may be disposed between the bottom surface of the case and the second introduction portion.

The case may include a first case defining an exterior of the case, and a second case defining an interior of the case, wherein the air discharge portion may include an air discharge outlet extending toward an inner side of the second case.

The air discharge portion may further include an air discharge tube extending upward from the air discharge outlet.

The air discharge portion may include at least one air discharge outlet.

The air discharge portion may further include a variable cover provided with a hole formed at a position corresponding to the air discharge outlet and rotatably coupled to vary a discharge amount at the air discharge outlet.

In accordance with another aspect of the present invention, a humidifier having a water filter installed in a water container, wherein the water filter includes a case filled with an ion exchange resin, at least one introduction portion formed along a circumference of an outer lateral surface of the case, a discharge portion positioned on a bottom surface of the case, and an air discharge portion positioned at a center of the case, wherein the air discharge portion is disposed lower than the introduction portion.

The case may include a first case defining an exterior of the case, and a second case defining an interior of the case, wherein the air discharge portion includes an air discharge outlet extending toward an inner side of the second case.

The air discharge portion may include at least one air discharge outlet, and a variable cover provided with a hole formed at a position corresponding to the air discharge outlet and rotatably coupled to the air discharge portion to vary a discharge rate at the air discharge outlet.

These and/or other aspects of the invention will become apparent and more readily appreciated from the following description of the embodiments, taken in conjunction with the accompanying drawings of which:
FIG. 1 is a perspective view schematically illustrating a humidifier equipped with a water container having a water filter according to an exemplary embodiment of the present invention;
FIG. 2 is a perspective view schematically illustrating a water filter installed in a water container of a humidifier according to one embodiment;
FIG. 3 is a perspective view schematically illustrating a water filter according to one embodiment;
FIG. 4 is a cross-sectional view taken along A-A' of FIG. 3;
FIG. 5 is a conceptual view schematically illustrating operation of a water filter according to one embodiment;
FIGS. 6 and 7 are views illustrating a water filter and operation thereof according to another embodiment of the present invention; and
FIG. 8 is a cross-sectional view schematically illustrating a water filter according to another embodiment of the present invention.

Reference will now be made in detail to the embodiments of the present invention, examples of which are illustrated in the accompanying drawings, wherein like reference numerals refer to like elements throughout.

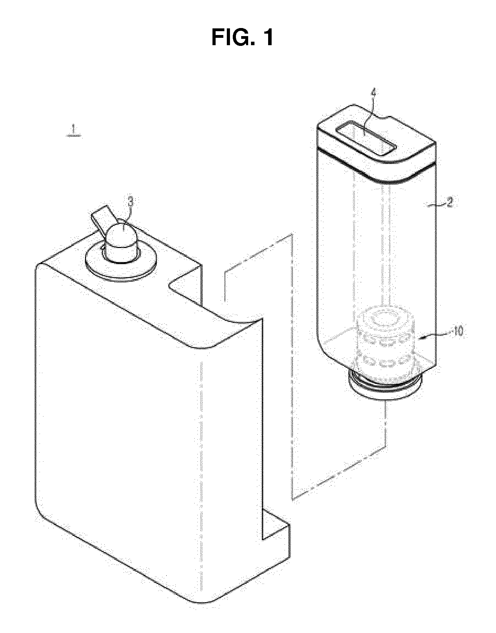

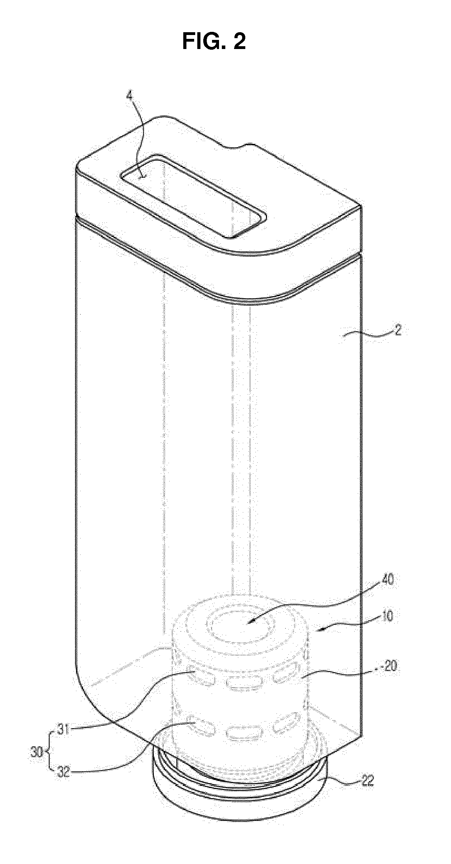

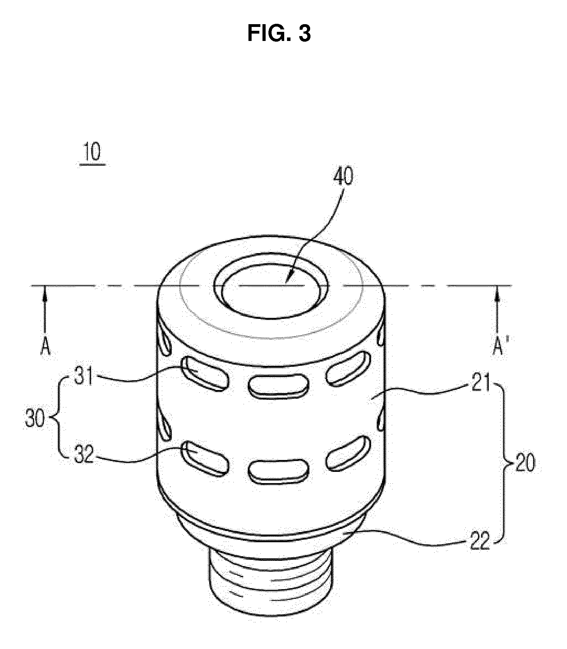

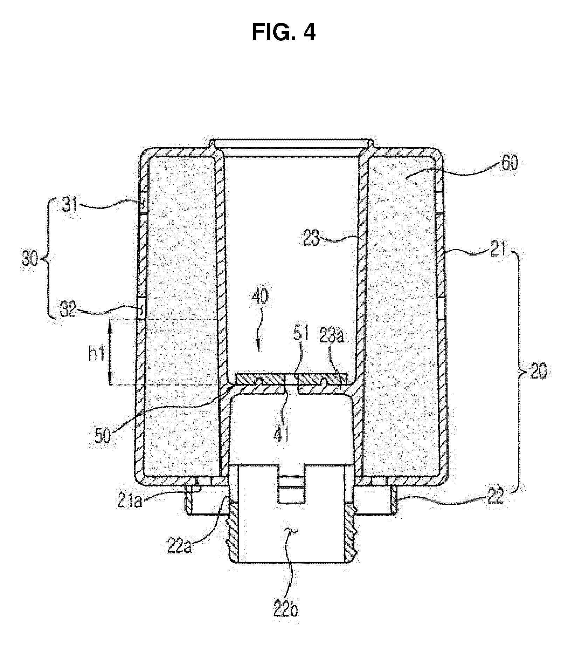

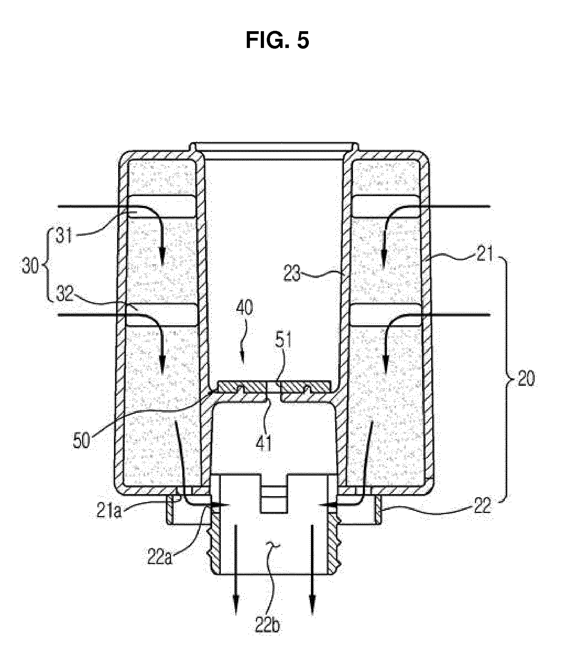

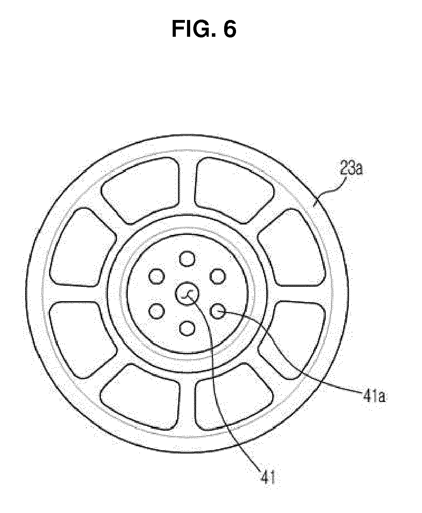

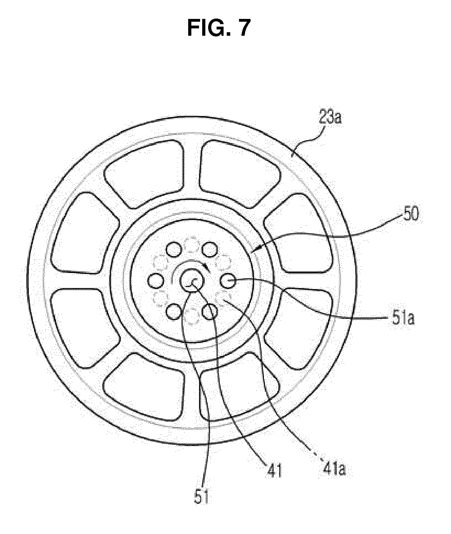

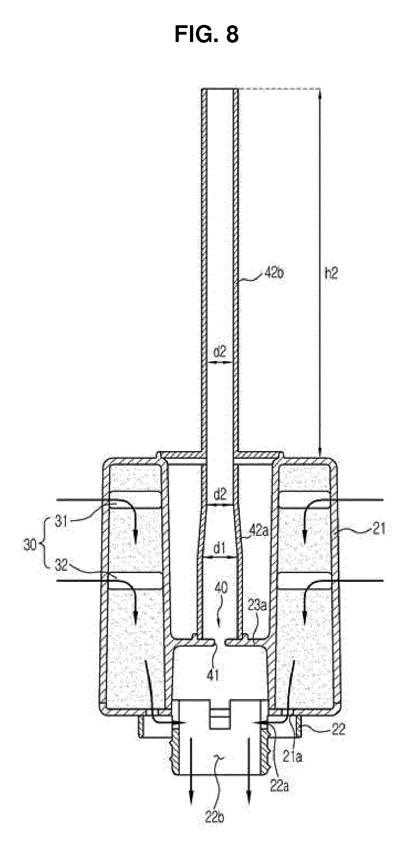

FIG. 1 is a perspective view schematically illustrating a humidifier equipped with a water container having a water filter according to an exemplary embodiment of the present invention. FIG. 2 is a perspective view schematically illustrating a water filter installed in a water container of a humidifier according to one embodiment. FIG. 3 is a perspective view schematically illustrating a water filter according to one embodiment. FIG. 4 is a cross-sectional view taken along A-A' of FIG. 3. FIG. 5 is a conceptual view schematically illustrating operation of a water filter according to one embodiment. FIGS. 6 and 7 are views illustrating a water filter and operation thereof according to another embodiment of the present invention. FIG. 8 is a cross-sectional view schematically illustrating a water filter according to another embodiment of the present invention.

As shown in FIGS. 1 to 5, a water filter 10 installed in a humidifier 1 may be mounted in a water container 2 of the humidifier 1 which stores water.

Although not shown in FIGS. 1 to 5, a heater to heat water drained from the water container 2 and an ultrasonic vibrator to produce particulates using ultrasound may be installed at the humidifier 1. While the humidifier 1 is illustrated in this embodiment as being an ultrasonic humidifier provided therein with a heater and an ultrasonic vibrator, embodiments of the present invention are not limited thereto. For example, a heating humidifier, an ultrasonic humidifier, a combination humidifier, a centrifugal spraying humidifier, and an evaporative humidifier may be employed as the humidifier.

A grip 4 may be formed on the top surface of the water container 2 of the humidifier 1 to allow a user to receive water into the water container 2 and mount the water container 2 to the humidifier 1. A drain (not shown) used to drain water having passed through the water filter 10 and a valve (not shown) connected to the water filter 10 to closer the drain may be arranged on the bottom surface of the water container 2. Accordingly, the water in the water container 2 of the humidifier 1 is purified by the water filter 10 and drained through the drain and the valve. The drained water is changed into microscopic particles by the heater and the ultrasonic vibrator and discharged outside through a sprayer 3 arranged at an upper end of the humidifier 1.

The water filter 10 includes cases 20 and 23 adapted to be filled with an ion exchange resin 60.

The cases 20 and 23 may include a first case 20 defining an outer portion and a second case 23 defining an inner portion.

Herein, the inner space between the first case 20 and the second case 23 may be filled with the ion exchange resin 60.

The first case 20 includes an upper case 21 forming an outer upper portion and a lower case 22 forming an outer lower portion.

An introduction portion 30 allowing water in the water container 2 to be introduced into the water filter 10 therethrough is formed on the outer lateral surface of the upper case 21.

The introduction portion 30 includes at least one first introduction portion 31 formed along the periphery of the upper lateral surface of the upper case 21, and at least one second introduction portion 32 formed along the periphery of the lower lateral surface of the upper case 21.

Herein, the first introduction portion 31 and the second introduction portion 32 may be formed in the shape of a mesh, thereby preventing leakage of the ion exchange resin 60 filling the cases 20 and 23 and removing particulates and impurities in the water.

In addition, an air discharge portion 40 may be formed through the center of the upper case 21 and the lower case 22.

The air discharge portion 40 is formed by the second case 23. The second case 23 is formed in a cylindrical shape at the center of the upper case 21, and the lower case 22 is installed on the bottom surface of the second case 23.

Herein, the bottom surface of the lower case 22 may be provided with a valve installation portion 22b to which a valve arranged to close the drain of the water container 2 is coupled.

In addition, the bottom surface of the upper case 21 is provided with a first drainage hole 21a allowing the water having passed through the ion exchange resin 60 in the cases 20 and 23 to be drained therethrough. The lower case 22 is provided with a second drainage hole 22a connected to allow the water drained through the first drainage hole 21a to be supplied toward the valve installation portion 22b. While the first drainage hole 21a and the second drainage hole 22a are illustrated in this embodiment as being respectively formed in the bottom surface of the upper case 21 and the lower case 22, embodiments of the present invention are not limited thereto. For example, the first drainage hole 21a may be formed in the second case 23.

The air discharge portion 40 may be disposed at a lower position than the introduction portion 30 and arranged between the bottom surface of the upper case 21 and the second introduction portion 32.

The air discharge portion 40 may include an air discharge outlet 41 formed by an extension 23a integrally extending from the second case 33 toward the inner center.

While this embodiment is illustrated as having one air discharge outlet 41 formed at the center, embodiments of the present invention are limited thereto. For example, at least one air discharge outlet 41 may be provided.

The air discharge portion 40 is disposed a predetermined height hi lower than the second introduction portion 32.

As the air discharge portion 40 is arranged at a lower position than the first introduction portion 31 and the second introduction portion 32, the water introduced through the first introduction portion 31 and second introduction portion 32 of the cases 20 and 23 may pass through the ion exchange resin 60 very efficiently. Thereby, the purification performance of the water filter 10 may be improved.

As shown in FIGS. 6 and 7, the water filter 10 may further include a variable cover 50 arranged at the air discharge portion 40 to regulate the air discharge rate.

The variable cover 50 may be provided with at least one variable discharge hole 51. The variable discharge hole 51 is formed at a position corresponding to the air discharge outlet 41 of the air discharge portion 40.

The discharge portion 40 may include an air discharge outlet 41 formed at the center of the discharge portion 40 and at least one air discharge hole 41a formed at the edge portion around the air discharge outlet 41.

The variable cover 50 may include a variable discharge hole 51 formed at the center thereof corresponding the air discharge outlet 41, and at least one variable discharge hole 51a formed at the edge portion around the variable discharge hole 51 to correspond to the air discharge hole 41a.

The variable cover 50 is rotatably coupled to the upper side of the air discharge portion 40 to regulate the discharge rate of the air discharged through the air discharge portion 40.

Accordingly, the air discharge hole 41a formed at the center may be kept open, while the discharge rate of the air through the air discharge hole 41a and the variable discharge hole 51a formed at the edge portion may be regulated by rotation of the variable cover 50.

As shown in FIG. 8, the air discharge portion 40 of a water filter 10 according to another embodiment, which is disposed between the bottom surface of the upper case 21 and the second introduction portion 32, may include an extension 23a integrally extending from the second case 23 toward the inner center, an air discharge outlet 41 formed at the center, and an air discharge tube 42 extending upward from the upper end of the air discharge outlet 41.

The air discharge tube 42 may include a first discharge tube 42a extending from the upper end of the air discharge outlet 41 to the top surface of the upper case 21, and a second discharge tube 42b connected to the first discharge tube 42a and extending upward a predetermined height h2 from the top surface of the upper case 21.

Herein, the first discharge tube 42a may be formed such that the air discharged from the air discharge outlet 41 is transferred up to the uppermost end of the second discharge tube 42b, and the width of the inner cross section of the first discharge tube 42a may gradually decrease (from d2 to d₁) to increase the flow speed of the discharged air.

The second discharge tube 42b is joined to the upper end of the second case 23 such that the center of the second discharge tube 42b may be connected to the first discharge tube 42a.

Herein, the diameter d2 of the second discharge tube 42b may be equal to the diameter d2 of the end portion of the first discharge tube 42a.

Inflow of water into the air discharge portion 40 may be prevented by the first discharge tube 42a and the second discharge tube 42b.

As an end of the second discharge tube 42b is positioned higher than the first introduction portion 31 and second introduction portion 32 of the upper case 21, water is allowed to pass through a wider area of the ion exchange resin 60. Thereby, purification efficiency may be improved.

As is apparent from the above description, according to embodiments of the present invention, hardness removal performance of a water filter of a humidifier and efficiency of utilization of an ion exchange resin may be enhanced.

In addition, since the area of the introduction portion is freely adjusted, foreign matter contained in the inflow water may be controlled according to the condition of the inflow water so as not to block the water filter.

Although a few embodiments of the present invention have been shown and described, it would be appreciated by those skilled in the art that changes may be made to the embodiments without departing from the principles of the invention, the scope of which is defined in the claims.

## Claims

1. A water filter comprising:
a case filled with an ion exchange resin;
an introduction portion positioned on an outer lateral surface of the case;
a discharge portion positioned on a bottom surface of the case; and
an air discharge portion positioned at a center of the case,
wherein the air discharge portion is disposed lower than the introduction portion.

2. The water filter according to claim 1, wherein the introduction portion comprises:
at least one first introduction portion formed along an upper circumference of the lateral surface of the case; and
at least one second introduction portion formed along a lower circumference of the lateral surface of the case.

3. The water filter according to claim 2, wherein the air discharge portion is disposed between the bottom surface of the case and the second introduction portion.

4. The water filter according to claim 1, 2 or 3, wherein the case comprises:
a first case defining an exterior of the case; and
a second case defining an interior of the case,
wherein the air discharge portion comprises an air discharge outlet extending toward an inner side of the second case.

5. The water filter according to claim 4, wherein the air discharge portion further comprises an air discharge tube extending upward from the air discharge outlet.

6. The water filter according to claim 4 or 5, wherein the air discharge portion comprises at least one air discharge outlet.

7. The water filter according to claim 6, wherein the air discharge portion further comprises a variable cover provided with a hole formed at a position corresponding to the air discharge outlet and rotatably coupled to vary a discharge amount at the air discharge outlet.
